# EUROPÄISCHE PATENTANMELDUNG

(11) **EP 2 343 130 A1**
(43) Veröffentlichungstag der Anmeldung: **13.07.2011**
(21) Anmeldenummer: 10013243.0
(22) Anmeldetag: 10.07.2008
(51) Int. Cl.: B03C 3/10, B05B 15/12

(54) **Vorrichtung zum Abscheiden von Lack-Overspray**

(30) Priorität: 25.07.2007 DE 102007036553
(62) Teilanmeldung aus: 08773946.2
(71) Anmelder: Eisenmann AG, 71032 Böblingen (DE)
(72) Erfinder: Swoboda, Werner, 71032 Böblingen (DE); Hihn, Erwin, 72141 Walddorfhäslach (DE); Hanf, Jürgen, 72070 Tübingen (DE); Link, Kersten, 71120 Grafenau (DE); Katefidis, Apostolos, 71116 Gärtringen (DE)
(74) Vertreter: Ostertag, Ulrich

(57) **Zusammenfassung**

Eine Vorrichtung (301) zum Abscheiden von Lack-Overspray aus der mit Overspray beladenen Kabinenluft von Lackierkabinen weist in einem Gehäuse (302) mindestens ein Abscheideelement (304) auf, dessen Oberfläche elektrisch leitend und mit einem Pol einer Hochspannungsquelle (314) verbunden ist. Dem Abscheideelement (304) ist eine Elektrodenanordnung (312) zugeordnet, die mit dem anderen Pol der Hochspannungsquelle (314) verbunden ist. Die Kabinenluft wird an dem Abscheideelement (304) und der Elektrodenanordnung (312) derart vorbeigeführt, dass die Overspray-Partikel ionisiert werden und sich an der Oberfläche des Abscheideelementes (304) niederschlagen. Das Abscheideelement (304) wird kontinuierlich oder intermittierend bewegt, wobei eine Abstreifeinrichtung (310) den an der Oberfläche des Abscheideelementes (304) befindlichen Overspray abstreift. Dieser kann dann von einer geeigneten Fördereinrichtung (303) zum Entsorgen oder Wiederverwenden abtransportiert werden. Mindestens ein Abscheideelement ist dabei eine drehbare Scheibe (304).

## Beschreibung

Die Erfindung betrifft eine Vorrichtung zum Abscheiden von Lack-Overspray aus der mit Overspray-beladenen Kabinenluft von Lackierkabinen nach dem Oberbegriff des Anspruches 1.

Zum effizienten Sammeln und Abscheiden von Wasserlack- bzw. Lösemittellack-Overspray werden im Automotiv-Bereich bisher fast ausschließlich Nassabscheider, auch Nass-Auswaschungen genannt, eingesetzt, wie sie beispielsweise in der EP 0 740 576 B1 oder der DE 44 01 741 beschrieben sind.

Im Allgemeinen besitzen derartige Nassabscheider unterhalb des rostartig ausgebildeten Kabinenbodens zwei zur Kabinenmitte geneigte Bleche, die vom Rand der Kabine her mit Wasser überströmt werden. Das Wasser fließt gemeinsam mit der von oben kommenden Kabinenluft durch eine Öffnung zwischen den inneren Rändern der beiden Bleche und gelangt von dort in eine die Luftströmung beschleunigende Düse. In dieser Düse findet eine Verwirbelung der durchströmenden Luft mit dem Wasser statt. Bei diesem Vorgang treten die Overspray-Partikel weitgehend in das Wasser über, so dass die Luft den Wasserabscheider im Wesentlichen gereinigt verlässt und sich die Overspray-Partikel in dem Wasser befinden. Aus diesem können sie dann wieder gewonnen oder entsorgt werden.

Die Hauptwirkung dieser Nassabscheider beruht, wie erwähnt, auf der Verwirbelung von Luft und Wasser; das die unteren Bodenbleche überströmende Wasser nimmt zwar aus der vorbeigeführten Luft auch in gewissem Umfange Overspray-Partikel auf; die Bleche können daher im oben genannte Sinne "Abscheideelemente" genannt werden. Dieser Effekt ist aber gegenüber dem Haupteffekt gering.

Die bekannten Nassabscheider haben den Vorteil einer guten Reinigungsleistung bei unproblematischem Betrieb. Diesem stehen jedoch auch diverse Nachteile gegenüber: So benötigen sie sehr viel Energie zur Umwälzung verhältnismäßig großer Wassermengen sowie durch den Druckverlust an den Strömungsengstellen, insbesondere der beschleunigenden Düse. Die Aufbereitung des Spülwassers ist durch den hohen Einsatz an lackbindenden und entklebenden Chemikalien und die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat.

Aufgabe der vorliegenden Erfindung ist es, eine Vorrichtung der eingangs genannten Art zu schaffen, bei welcher insbesondere der Energieverbrauch reduziert ist.

Diese Aufgabe wird durch die im Anspruch 1 angegebene Erfindung gelöst.

Die vorliegende Erfindung verlässt also den Grundgedanken, mit großen Mengen Wasser, die mit dem Luftstrom verwirbelt werden, aus der Luft die Overspray-Partikel zu entfernen, sondern bewirkt die Abscheidung auf "trockenem" Wege. Dadurch entfallen alle Nachteile, die oben im Einzelnen erwähnt wurden und mit der Verwendung von Wasser verbunden sind. Die Trockenabscheidung erfolgt an elektrisch leitenden Oberflächen von Abscheideelementen. Die Effizienz dieser Abscheidung wird durch eine Ionisation der Overspray-Partikel verstärkt, die dafür sorgt, dass die Overspray-Partikel zu den leitenden Oberflächen der Abscheideelemente elektrostatisch hingezogen werden. Um einen Dauerbetrieb der Vorrichtung zu gewährleisten, sind die Abscheideelemente und ggfs. die Abstreifeinrichtung beweglich, so dass stets ein verhältnismäßig sauberer Oberflächenbereich der Luft präsentiert werden kann, während andere Oberflächenbereiche durch die Abstreifeinrichtung von abgeschiedenem Overspray befreit werden.

Erfindungsgemäß ist das mindestens eine Abscheideelement eine drehbare Scheibe. Eine solche Scheibe ist kostengünstiger als Bänder oder Walzen und hat den zusätzlichen Vorteil, dass das in Inneren liegende "Totvolumen", das an dem Abscheideprozess nicht teilnimmt, besonders klein ist.

Zur Vergrößerung der Abscheideoberfläche können vorzugsweise mehrere Scheiben parallel zueinander auf einer gemeinsamen Achse angeordnet sein.

Die Achse jeder Scheibe kann etwa vertikal verlaufen.
Dann wirken die vollen Hauptflächen der Scheiben als Prallelemente, was die rein mechanische Abscheidung durch Anhaften verstärkt. Hierdurch wird allerdings die Drosselwirkung etwas erhöht.

Alternativ kann die Achse jeder Scheibe auch etwa horizontal verlaufen, was mit einer Verlängerung der Verweilzeit der Overspray-Partikel im elektrischen Feld einhergeht. Außerdem ist der Drosselverlust der Luftströmung an derart angeordneten Scheiben verhältnismäßig gering.

Zwischen den beiden gewünschten, sich aber ausschließenden Wirkungen kann ein Kompromiss dadurch erzielt werden, dass die Achse jeder Scheibe unter einem schrägen Winkel, der weder 0° noch 90° ist, zur Horizontalen verläuft.

Im Allgemeinen sollten mehrere elektrisch parallel geschaltete Elektrodeneinrichtungen vorgesehen sein, die in die Zwischenräume zwischen den Abscheideelementen und/oder die Zwischenräume zwischen den Abscheideelementen und den Wänden des Gehäuses eingreifen. Die Zahl und Dichte der Elektrodeneinrichtungen wird so gewählt, dass eine möglichst vollständige Ionisierung der Overspray-Partikel erreicht wird.

Die Elektrodeneinrichtung kann insbesondere die Form eines in einer Ebene gegebenenfalls mehrfach hin- und hergebogenen Drahtes oder Stabes besitzen. Sie erhält auf diese Weise eine Art "flächigen" Charakters, was die Wechselwirkung zwischen Elektrodeneinrichtung und vorbeiströmender Luft vergrößert.

Mindestens eine Abstreifeinrichtung kann ein Rakel sein, welches den Overspray von der Oberfläche mindestens eines Abscheideelementes abkratzt. Diese mechanische Art, den Overspray von den Oberflächen zu entfernen, ist besonders zuverlässig und unproblematisch.

Für die Ionisation der Overspraypartikel kann es förderlich sein, wenn die Hochspannungsquelle in der Lage ist, eine gepulste Hochspannung zu erzeugen.

Ein Ausführungsbeispiel der Erfindung wird nachfolgend anhand der Zeichnung näher erläutert. Es zeigen
- Figur 1: eine Overspray-Abscheidevorrichtung im vertikalen Schnitt;
- Figur 2: die Abscheidevorrichtung von Figur 1 perspektivisch bei abgenommener Vorderwand.

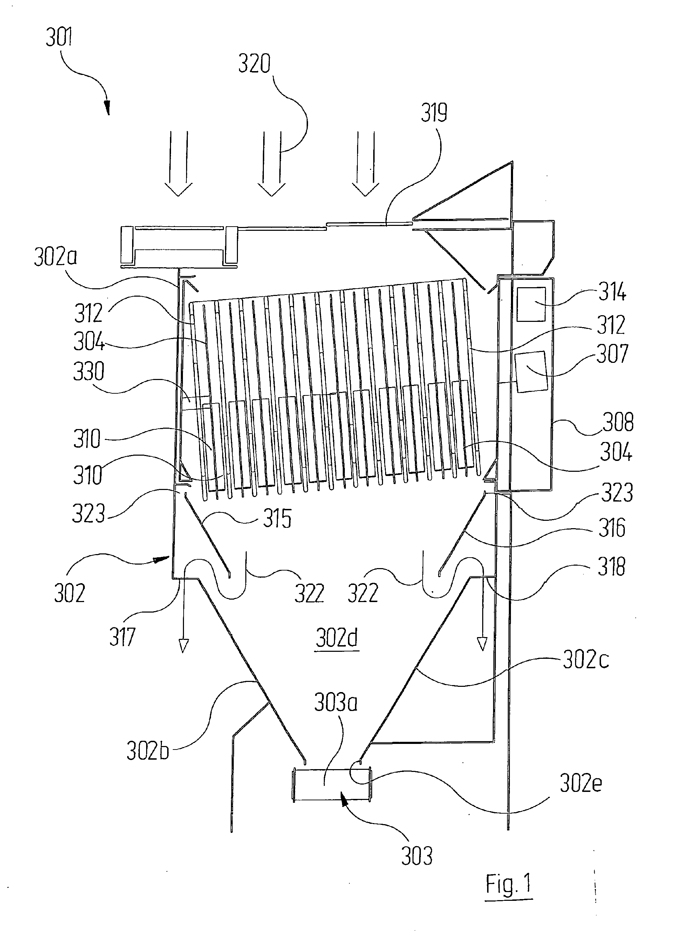

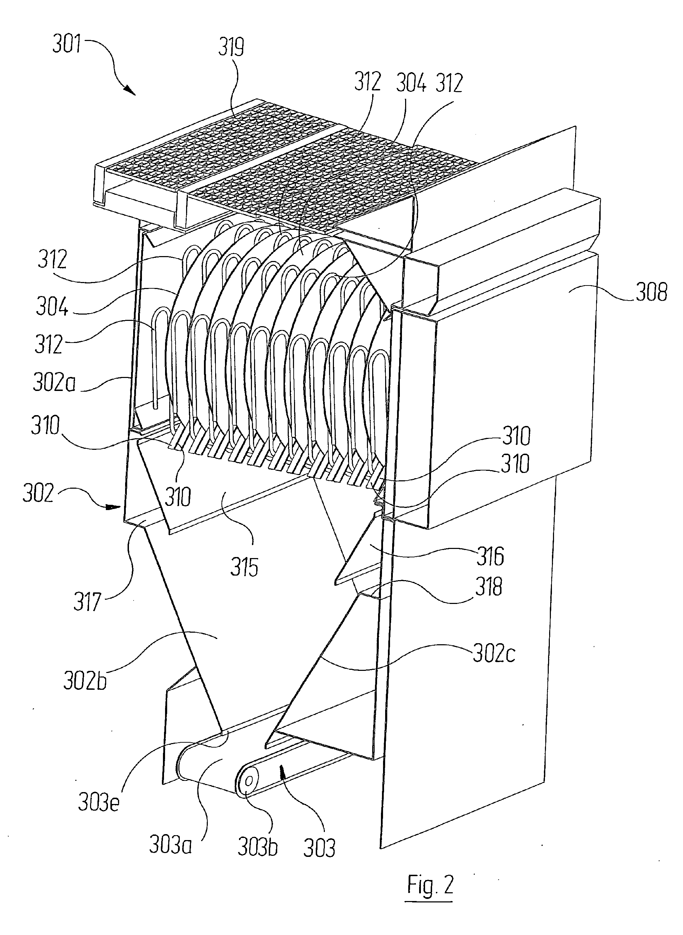

Die in der Zeichnung dargestellte und insgesamt mit dem Bezugszeichen 301 gekennzeichnete Overspray-Abscheidevorrichtung umfasst ein Gehäuse 302, das in seinem oberen Bereich (302a) rechteckigen Querschnitt und ausschließlich vertikale Seitenwände aufweist, während es im unteren Bereich durch zwei schräg nach unten konvergierende Seitenwände 302b, 302c und zwei vertikal verlaufende Stirnwände 302d (nur eine in den Figuren 1 und 2 gezeigt) begrenzt ist. Auf diese Weise ist der untere Bereich des Gehäuses 302 nach Art eines Trichters ausgebildet.

Unterhalb der von den unteren Rändern der Gehäusewände 302b, 302c und 302d begrenzten Austrittsöffnung 302e des "Trichters" ist eine Fördereinrichtung 303 angeordnet. Die Fördereinrichtung 303 umfasst ein Endlosförderband 303a, welches über zwei Umlenkwalzen 303b geführt ist. In Figur 2 ist nur eine dieser Umlenkwalzen 303b dargestellt; eine der beiden Umlenkwalzen 303b ist in bekannter Weise angetrieben.

Die gereinigte Luft verlässt die Overspray-Abscheidevorrichtung über die Luftaustrittsschlitze 217, 218 wie bei den oben beschriebenen Ausführungsbeispielen.

Im oberen, quaderförmigen Bereich 302a des Gehäuses 302 ist eine Vielzahl von kreisrunden Scheiben 304 angeordnet, deren gegenüberliegende Hauptflächen als Abscheideflächen dienen. Alle Scheiben 304 sitzen auf einer gemeinsamen Welle 330, die von einem Motor 307 in Drehung versetzt werden kann. Die Verbindung zwischen dem Motor 307 und der Welle 330 ist in der Zeichnung nicht detailliert dargestellt.

Zwischen den einzelnen Scheiben 304 sind, parallel zu diesen, Elektrodeneinrichtungen 312 vorgesehen, die in diesem Falle die Form von mehreren U-förmig gebogenen Drähten besitzen. Alle Elektrodeneinrichtungen 312 sind mit einer Hochspannungsquelle 314 verbunden, die zusammen mit dem Motor 307 in einem Kasten 308 an der Außenseite des Gehäuses 302 untergebracht ist.

Jeder Scheibe 304 sind zwei Rakel 310 zugeordnet, die an gegenüberliegenden Hauptflächen der jeweiligen Scheibe 304 anliegen.

Die Funktionsweise der Overspray-Abscheidevorrichtung 301 ist wie folgt:
Die mit Overspray-Partikeln beladene Kabinenluft wird im Sinne der Pfeile 320 zugeführt und durchtritt die Gitterroste 319. Sie gelangt dann in den Zwischenraum zwischen den sich drehenden Scheiben 304. Auf Grund der Schrägstellung dieser Scheiben 304 gegenüber einer vertikalen Ausrichtung strömt nicht einfach der Großteil der Luft an den Hauptflächen der Scheiben 304 vorbei, sondern trifft auf diese Hauptflächen auf und wird dort umgeleitet, so dass die Scheiben 304 gleichzeitig als Prallbleche wirken. Schon dieses Auftreffen des Luftstromes hat zur Folge, dass sich ein Teil des Oversprays an der angeströmten Hauptfläche der Scheiben 304 abscheidet. Die Abscheidewirkung wird dadurch noch nachhaltig verbessert, dass die Elektrodenanordnungen 312 die Overspray-Partikel ionisieren, die dann von den auf Massepotential liegenden Scheiben 304 angezogen werden.

Das sich auf den Hauptflächen der Scheiben 304 sammelnde Overspray wird mit Hilfe der Rakel 310 abgestreift und fällt nach unten, so dass es letztendlich von dem Fördersystem 303 abtransportiert werden kann.

Die beim Durchgang zwischen den Scheiben 304 von Overspray gereinigte Luft bewegt sich unter den unteren Rändern von Luftleitblechen 315, 316 im Sinne der Pfeile 322 hindurch und tritt dann durch die Luftaustrittsschlitze 317, 318 aus. Die gereinigte Luft kann dann - gegebenenfalls nach einer gewissen Konditionierung - wieder der Spritzkabine zugeführt werden. Bei der Konditionierung kann es sich insbesondere um ein Nachregeln der Temperatur, Der Luftfeuchte und ggfs. um das Entfernen von Lösemitteln handeln.

Die Art des Fördersystems, der Luftführung und der Elektrodeneinrichtung können beliebig geändert werden, sofern nur die erwünschte Funktion erzielt wird. Statt eines nach unten geöffneten Gehäusetrichters, unter dem ein Fördersystem angordnet ist, kann auch eine geschlossene Wanne vorgesehen sein, in der eine Schabereinrichtung den gesammelten Overspray abtransportiert.

An die Elektrodeneinrichtungen kann statt eines konstanten Gleichstromes auch ein gepulster Gleichstrom angelegt werden.

Bei dem oben beschriebenen Ausführungsbeispiel strömt die Luft vertikal von oben nach unten. Es sind jedoch auch Abscheidevorrichtungen denkbar, bei denen die Luftströmungsrichtung horizontal ist. In diesem Falle kann die beschriebene Abscheidevorrichtung um 90° verdreht eingesetzt werden, derart dass aus der Richtungsangabe "vertikal" "horizontal" und aus der Richtungsangabe "horizontal" "vertikal" wird. Auch Verdrehungen um andere Winkel als 90° sind denkbar.

## Patentansprüche

1. Vorrichtung zum Abscheiden von Lack-Overspray aus
der mit Overspray beladenen Kabinenluft von Lackierkabinen mit
a) einem Gehäuse (302);
b) mindestens einem in dem Gehäuse (302) angeordneten Abscheideelement (304), an dessen Oberfläche die Kabinenluft entlang führbar ist, wodurch Overspray-Partikel auf der Oberfläche zurückbleiben, während ganz oder teilweise gereinigte Luft weiterströmt;
c) einer Einrichtung, mit welcher der abgeschiedene Overspray von der Oberfläche des Abscheideelements (304) abtransportiert wird;
wobei
d) die Oberfläche des Abscheideelements (304) elektrisch leitend und mit einem Pol einer Hochspannungsquelle (314) verbunden ist;
e) dem Abscheideelement (304) eine im Luftstrom angeordnete Elektrodeneinrichtung (312) zugeordnet ist, die mit dem anderen Pol der Hochspannungsquelle (314) verbunden ist;
f) eine Einrichtung (307) vorgesehen ist, mit welcher das Abscheideelement (304) kontinuierlich oder intermittierend in Bewegung gesetzt werden kann;
g) dem Abscheideelement (304) eine Abstreifeinrichtung (310) zugeordnet ist, welche unter Ausnutzung einer Relativbewegung zwischen Abscheideelement (304) und Abstreifeinrichtung (310) den an der Oberfläche des Abscheideelements (304) befindlichen Overspray abstreift;
**dadurch gekennzeichnet, dass**
h) mindestens ein Abscheideelement eine drehbare Scheibe (304) ist.

2. Vorrichtung nach Anspruch 1, **dadurch gekennzeichnet, dass** mehrere Scheiben (304) parallel zueinander auf einer gemeinsamen Achse (330) angeordnet sind.

3. Vorrichtung nach Anspruch 1 oder 2, **dadurch gekennzeichnet, dass** die Achse jeder Scheibe etwa vertikal verläuft.

4. Vorrichtung nach Anspruch 1 oder 2, **dadurch gekennzeichnet, dass** die Achse jeder Scheibe etwa horizontal verläuft.

5. Vorrichtung nach Anspruch 1 oder 2, **dadurch gekennzeichnet, dass** die Achse (330) jeder Scheibe (304) unter einem schrägen Winkel, der weder 0° noch 90° ist, zur Horizontalen verläuft.

6. Vorrichtung nach einem der vorhergehenden Ansprüche, **dadurch gekennzeichnet, dass** mehrere elektrisch parallel geschaltete Elektrodeneinrichtungen (312) vorgesehen sind, die in die Zwischenräume zwischen den Abscheideelementen (304) und/oder die Zwischenräume zwischen den Abscheideelementen (304) und den Wänden des Gehäuses (302) eingreifen.

7. Vorrichtung nach einem der vorhergehenden Ansprüche, **dadurch gekennzeichnet, dass** mindestens eine Elektrodeneinrichtung (312) die Form eines in einer Ebene gegebenenfalls mehrfach hin- und hergebogenen Drahtes oder Stabes besitzt.

8. Vorrichtung nach einem der vorhergehenden Ansprüche, **dadurch gekennzeichnet, dass** mindestens eine Abstreifeinrichtung ein Rakel (310) ist, welches den Overspray von der Oberfläche mindestens eines Abscheidelements (304) abstreift.

9. Vorrichtung nach einem der vorhergehenden Ansprüche, **dadurch gekennzeichnet, dass** die Hochspannungsquelle (314) in der Lage ist, eine gepulste Hochspannung zu erzeugen.
